# EUROPEAN PATENT SPECIFICATION

(11) **EP 1 285 791 B1**
(45) Date of publication and mention of the grant of the patent: **25.08.2004**
(21) Application number: 02253580.1
(22) Date of filing: 21.05.2002
(51) Int. Cl.: B60H 1/32

(54) **Vehicular air conditiong apparatus comprising hybrid compressor**
Fahrzeug-Klimaanlage mit Hybridkompressor
Appareil de climatisation de véhicule comprenant un compresseur hybride

(30) Priority: 22.08.2001 JP 2001251527
(43) Date of publication of application: 26.02.2003
(73) Proprietor: Sanden Corporation, Isesaki-shi, Gunma 372-8502 (JP)
(72) Inventor: Tsuboi, Masato, c/o Sanden Corporation, Isesaki-shi, Gunma 372-8502 (JP); Inoue, Atuo, c/o Sanden Corporation, Isesaki-shi, Gunma 372-8502 (JP)
(74) Representative: Haley, Stephen

(56) References cited:
- EP-A- 1 018 446
- DE-A- 10 052 898
- PATENT ABSTRACTS OF JAPAN vol. 1999, no. 02, 26 February 1999 (1999-02-26) & JP 10 291415 A (DENSO CORP), 4 November 1998 (1998-11-04)

## Description

The present invention relates to a vehicular air conditioning apparatus. More particularly, this invention relates to a vehicular air conditioning apparatus that always selects a compressor drive source that minimizes power consumption of the compressor from among a vehicular engine and an electric motor.

Generally, a vehicular air conditioning apparatus comprises mainly an air duct having a fan, a refrigeration circuit that cools the air flowing through the air duct, an engine cooling water circuit that heats the air flowing through the air duct, and a main controller. The refrigerant in the refrigeration circuit is forcibly circulated by a compressor. Usually, the conventional compressor drive source is the engine of the vehicle.

In recent years, however, a different kind of compressor, known as a hybrid compressor, of which the drive source can be selected from among the engine and an electric motor, has become available. This compressor can be driven either by the vehicular engine or the electric motor when the engine is stopped. At present, the best way for selecting the compressor drive source has not been established. One technical idea regarding the selection of the drive source is disclosed in Japanese Patent Publication JP 10/291415A.

The logic of the selection for the compressor drive source according to the JP 10/291415A, is basically simple. It dictates to select the engine as the compressor drive source if the engine is running and to select the electric motor as the compressor drive source while the engine is at rest.

According to analysis by the inventor of the present invention, this selection does not contain any power consumption saving for the entire vehicle. For external conditional parameters for the vehicular air conditioning apparatus equipped with the hybrid compressor, parameters concerning the thermal load on the air conditioning apparatus e.g., ambient temperature, engine rotational frequency, battery voltage and so on, may be named. These external conditional parameters change continuously.

According to further analysis by the inventor of the present invention, it has been found that it is less energy consuming to drive the compressor using the electric motor in some conditions, even if the engine is running. And in addition, it has been found that there exists conditions in which it is also less energy consuming to drive the compressor using the engine when the engine is running.

The object of the present invention is to provide a vehicular air conditioning apparatus capable of performing a selection control of the compressor drive source that always minimizes the resultant compressor power consumption. The main controller of the vehicular air conditioning apparatus according to the present invention has means for estimating the compressor power consumption assuming both the case where the compressor is driven by the engine and where the compressor is driven by the electric motor, and comparing means for comparing the results of the estimations. Based on the decision of the comparison, the main controller connects to the compressor the less energy consuming drive source, thereby saving effectively the total power consumption of the entire vehicle.

Other objects, features, and advantages of this invention will be understood from the following description of preferred embodiments with reference to the drawings, in which:
Fig. 1 is a schematic structural diagram of a vehicular air conditioning apparatus according to the embodiment of the present invention;
Fig. 2 is a control chart of Fig. 1; and
Fig. 3 is a modification of Fig. 2.

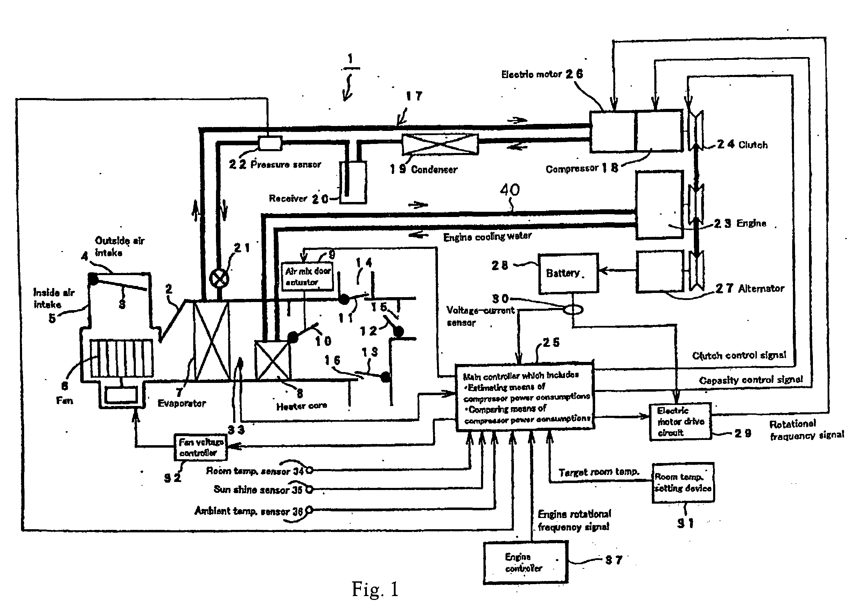

In Fig. 1, a vehicular air conditioning apparatus 1 according to the present invention is shown. This vehicular air conditioning apparatus 1 comprises mainly a water circuit 40 in which engine cooling water circulates, and a refrigeration circuit 17 in which a refrigerant circulates.

The water circuit 40 comprises a vehicular engine 23 and a heater core 8 provided in an air duct 2. In the water circuit 40 the engine cooling water is circulated. The engine cooling water is heated in the engine 23, and transfers that heat content via the heater core 8 to air flowing in the air duct 2.

The refrigeration circuit 17 comprises a compressor 18, a condenser 19, a receiver 20, a pressure sensor 22, an expansion valve 21, and an evaporator 7 disposed in the air duct 2. The refrigerant discharges heat at the condenser 19 that is provided outside the vehicular compartment, and absorbs heat via the evaporator 7 that is disposed in the air duct 2 from the air flowing through the air duct 2.

In the air duct 2, a fan 6, the evaporator 7, the heater core 8, an air mix door 10, and dampers 11, 12, 13 are disposed in this order. The fan 6 sucks air from either an inside air intake 5 or an outside air intake 4 and blows it toward the direction of the dampers 11, 12, 13 in the air duct 2. A damper 3 selects the air that is sucked by the fan 6 from among the inside air intake 5 and outside air intake 4. The angular position of the damper 3 may be either controlled manually or by an action of a main controller 25. The air is then blown into the air duct 2. When passing through the evaporator 7, the air is cooled. When passing through the heater core 8, the air is rewarmed. By controlling an angular position of the air mix door 10, it is possible to control the ratio of the amount of the air that passes through the heater core 8 and the amount of the air that bypasses the heater core 8. The air that has been thus temperature conditioned is then discharged into the compartment of the vehicle via discharge ports 14, 15, and 16. The dampers 11, 12, and 13 control the opening degree of the discharge ports 14, 15, and 16 respectively.

The compressor 18 can be driven by the engine 23 via a clutch 24. If the clutch 24 is turned on, then the driving force of the engine 23 is transferred to the compressor 18. Further, an electric motor 26 is provided integrally with the compressor 18. That is, the drive shaft of the compressor 18 is integrally formed with the rotor shaft of the electric motor 26. Accordingly, when the clutch 24 is turned off, i.e., when the engine driving force is not transferred to the compressor 18, then the compressor can be driven by the electric motor 26. It is the key point of the present invention how to select the driving source of the compressor from the engine 23 and the electric motor 26.

Electric power is fed to the electric motor 26 from an electric motor drive circuit 29 so as to control the rotational frequency of the electric motor 26. The electric motor drive circuit 29 is fed from a battery 28. The engine 23 drives an alternator 27 too. Electric power generated by the alternator 27 is used to charge the battery 28. The voltage of the battery 28 applied to the electric motor drive circuit 29 is measured by a voltage-current sensor 30.

The main controller 25 receives a signal from the voltage-current sensor 30. Further, the main controller 25 receives signals from a sensor 33 of temperature of air discharged from the evaporator 7, a room air temperature sensor 34, a sunshine quantity sensor 35, an ambient air temperature sensor 36, the pressure sensor 22, an engine controller 37, and a room temperature setting device 31. The pressure sensor 22 sends a signal representing the magnitude of pressure of high pressure side of the refrigerant circuit 17 to the main controller 25. The engine controller 37 sends a signal indicating engine rotational frequency to the main controller 25. The room temperature setting device 31 sends a signal indicating set temperature desired by the passenger. The voltage-current sensor 30 sends a signal indicating the voltage of the battery 28 to the main controller 25.

After processing the above-named signals, the main controller 25 outputs a clutch control signal, a capacity control signal, a control signal for the electric motor drive circuit 29, a control signal for a fan voltage controller 32, and a control signal for an air mix door actuator 9. Specifically, the main controller 25 according to the present invention has estimating means for estimating the compressor power consumption and a comparing means for the estimated compressor power consumption that will be described below.

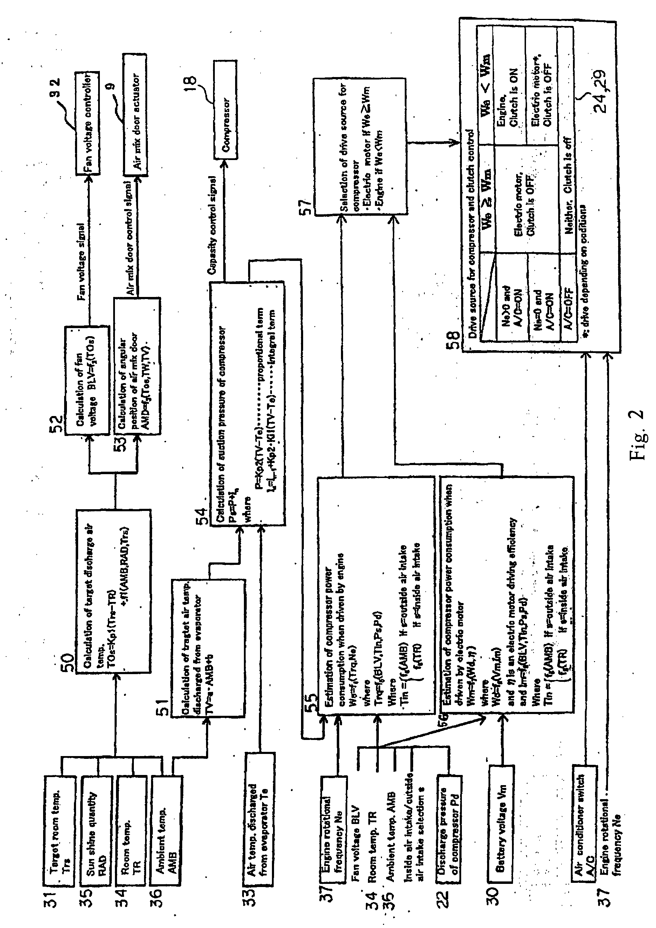

A more concrete picture of the control of the present invention is shown in Fig. 2. The various calculations for controls shown in Fig. 2 are performed in the main controller 25. The various variables cited at the left side of the Fig. 2 are the quantities outputted from the various sensors 22, 30, 33, 34, 35, 36 and the external engine controller 37 and the setting device 31, or quantities internally calculated in the main controller 25.

The various boxes cited at the right side of the Fig. 2 are resultant control output signals. That is, by the control signals that the main controller 25 outputs, the fan voltage controller 32, the air mix door actuator 9, the compressor 18. the clutch 24, and the electric motor drive circuit 29 are controlled.

Tracing the upper half of the Fig. 2 briefly, in a box 50, a target discharged air temperature TOs is calculated from the target air temperature Trs, the sunshine quantity RAD, the room temperature TR, and the ambient temperature AMB. Here we mean the discharged air is the air that is discharged from the discharge ports 14, 15, 16 of Fig. 1. Referring to Fig. 2 again, in a box 51, a target temperature TV of air discharged from the evaporator 7 is calculated. Here we mean this discharged air from the evaporator 7 is the air flowing immediately downstream of the evaporator 7 of Fig. 1. Referring to Fig. 2 again, in a box 52, a fan voltage BLV is calculated. The signal BLV is then sent to the fan voltage controller 32 as a fan voltage control signal. In a box 53, a control signal AMD that specifies the angular position of the air mix door 10 is calculated. The signal AMD is then sent to the air mix door actuator 9 from the box 53. In a box 54, a capacity control signal Ps for the compressor 18 is calculated using a proportional-integral algorithm. The signal Ps is sent from the box 54 to the compressor 18.

By the above described control, the vehicular air conditioning apparatus 1 works so as to realize the proper flow velocity and proper temperature of discharged air that is blown from the air discharge ports 14, 15, 16 and the proper temperature of discharged air flowing immediately downstream of the evaporator 7. The functions f₁ and f₃ that appear in the boxes 50-54 may be composed from linear functions of which coefficients and constants are chosen adequately. The function f₂ may be composed from a valley shaped curve which is defined segmentally. The signs Kp1, a, b, Kp2, and K₁ appearing in the boxes 50-54 are properly designed constants. TW is the temperature of the engine cooling water.

In the lower half of Fig. 2 is shown a control that realizes the main purpose of the present invention. To execute the calculations nested in boxes 55, 56, is the function of the estimating means of the compressor power consumptions of the main controller 25. In the box 55, the compressor power consumption We that occurs if it is driven by the engine, is calculated. For the calculation of We, the estimated compressor torque Trq and engine rotational frequency Ne are used as variables. For the calculation of We, the variables BLV, Tin, Ps, Pd are used. Here the variable Tin, as suggested in the box 55, is a function of AMB when the outside air is introduced into the air duct, and is also a function of TR when inside air is introduced into the air duct. Each function f₄, f₅,f₆ for calculating the We, Trq, Tin may be composed using linear functions. The appropriate coefficients and constants of the functions f₄, f₅, f₆ may be determined by conducting a multivariate analysis on a statistical correlation data between the input variable (BLV, Tin, Ps, Pd) and output variable We obtained by actual experiment action or a simulation. Of course, the functions f₄, f₅, f₆ may have functional forms other than a linear function.

In the box 56, the compressor power consumption Wm that occurs if it is driven by the electric motor, is calculated. For the calculation of Wm, an estimated electric motor power consumption Wd and an electric motor driving efficiency η are used as variables. For the calculation of Wd; the battery voltage Vm given by the voltage-current sensor 30 and a pseudo current Im are used. For the calculation of Im, the variables BLV, Tin, Ps, Pd are used. Here the variable Tin, as suggested in box 56, is a function of AMB when outside air is introduced into the air duct, and is also a function of TR when inside air is introduced into the air duct. Each function f₇, f₈, f₉, and f₆ for calculating the Wim, Wd, Im and Tin may be composed using linear functions. The appropriate coefficients and constants of the functions f₇, f₈, f₉, and f₆ may be determined by conducting a multivariate analysis on statistical correlation data between the input variables *(BLV,* Tin, Ps, Pd) and output variables (Wim, Wd, Id) obtained by actual experiment action or a simulation. Of course, the functions f₇, f₈, f₉, and f₆ may have functional forms other than the linear function.
In this way, it is possible to calculate the compressor power consumption We which occurs if it is driven by the engine and the compressor power consumption Wm which occurs if it is driven by the electric motor.

Then, in a box 57, a comparison between the magnitudes of the values We and Wm is made. With reference to the box 57 in Fig. 2, if We is greater than the Wm, then the electric motor is selected as the driving source of the compressor. This is rational. On the contrary, if We is less than the Wm, then the engine is selected as the driving source of the compressor. This is also rational.

The box 58 defines finer control rules for various conditions. Ne is the engine rotational frequency sent from the engine controller 37. The inequality Ne>0 means that the engine is running. Ne=0 means that the engine is at rest. The expression A/C=ON means a state in which the switch of the air conditioning apparatus is ON. On the contrary, the expression A/C=OFF means a state in which the switch of the air conditioning apparatus is OFF.

As is already mentioned, in accordance with the result of comparison between the magnitudes of the values of We and Wm that were calculated in the boxes 55, 56, the drive source of the compressor is selected. If Ne>0 and A/C=ON, and simultaneously We≥Wm, then the electric motor 26 is selected as the driving source of the compressor 18. When the electric motor is used the clutch 24 is turned off. If Ne>O and A/C=ON, and simultaneously We<Wm, then the engine 23 is selected as the driving source of the compressor 18. When the engine is used, the clutch 24 is turned on.

In the table shown in the box 58, a row of Ne=0 and A/C=ON and a row of A/C=OFF, define additional control rules. When Ne=0, of course, for the driving source of the compressor 18 remains only the electric motor 26. Though, according to the control rule of the box 58, even when Ne=0 and We<Wm, exceptional driving by the electric motor 26 is done conditionally, depending upon some condition e.g., abnormally high room temperature.

When A/C=OFF, the compressor is switched off as well as the air conditioning apparatus, so neither driving source is used to drive the compressor.

Thus, since the main controller always calculates both the compressor power consumption We which occurs if it is driven by the engine and the compressor power consumption Wm which occurs if it is driven by the electric motor, and compares the resultant values of the We and Wm, and selects the less power consuming drive source for the compressor, naturally it is possible to save the energy of the entire vehicle.

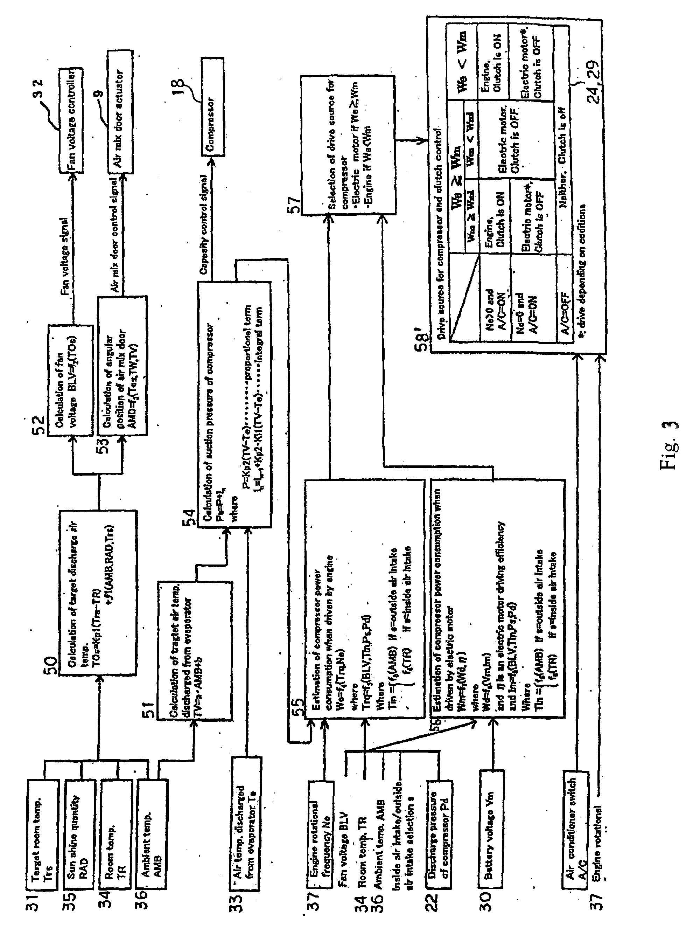

Fig. 3 is an example of a modification of the control of the present invention. Fig. 2 and Fig. 3 are identical except for a difference between the tables nested in the boxes 58 and 58'. Usually, a power consumption limit Wml is often designated in a specification for the air conditioning apparatus that is presented from the vehicular manufacturer. The table in the box 58' in Fig. 3 and the table in the box 58 in Fig. 2 differ in one control rule in a cell for Ne>0 and A/C=ON and Wm≥Wml. According to the control rule of the table in the box 58', even when the compressor power consumption Wm which occurs if it is driven by the electric motor is less than the compressor power consumption We which occurs if it is driven by the engine, if it is greater than the power consumption limit Wml, then the engine is chosen as the driving source of the compressor exceptionally and the clutch 24 is turned on.

By the control shown in Fig. 3, it is also possible to save power consumption of the entire vehicle, and in addition, simultaneously to meet the requirement of the specification requested by the vehicle manufacturer of the air conditioning apparatus.

Although the present invention has been described in detail in connection with preferred embodiment, the invention is not limited thereto. It will be understood by those skilled in the art that variations and modifications may be made within the scope of this invention, as defined by the following claims.

## Claims

1. A vehicular air conditioning apparatus (1) comprising,
an air duct (2);
a fan (6) disposed in said air duct (2);
an evaporator (7) disposed in said air duct (2);
a heater core (8) disposed in said air duct (2);
an air mix door (10) disposed at immediately downstream place of said heater core (8);
a refrigeration circuit (17) consisting of a variable displacement compressor (18) which can be driven by either an electric motor (26) directly or a vehicular engine (23) via a clutch (24), a condenser (19), a receiver (20). a pressure sensor (22), an expansion valve (21). and said evaporator (7);
a water circuit (40) consisting of said engine (23) and said heater core (8);
an electric motor drive circuit (29) that controls the rotational frequency of said electric motor (26);
a temperature sensor (33) that detects the temperature (Te) of an air discharged from said evaporator (7);
a temperature sensor (34) that detects the room temperature (TR) in a compartment of vehicle;
a sensor (35) that detects the sun shine quantity (RAD)
a temperature sensor (36) that detects the ambient air temperature (AMB);
an engine controller (37) that output an engine rotational frequency signal (Ne);
a room temperature setting device (31) that outputs target room temperature (Trs);
a voltage-current sensor (30) that detects a voltage (Vm) of a battery (28) that feeds an electric power to said electric motor drive circuit (29);
a main controller (25) that processes these above signals and outputs control signals to a fan voltage controller (32), an air mix door actuator (9), said clutch (24), said compressor (18), and. said electric motor drive circuit (29); wherein
said main controller (25) has means for calculating both compressor power consumption We which occurs if said compressor (18) is driven by said engine (23) and compressor power consumption Wm which occurs if said compressor (18) is driven by said electric motor (20) based on values of signals of the above sensors and internally calculated values, and a means for comparing the values of We and Wm, and controls said electric motor drive circuit (29) and said clutch (24) so as to drive said compressor (18) by said electric motor (26) if We≥Wm, and by said engine (23) if We<Wm.

2. A vehicular air conditioning apparatus (1) of claim 1, wherein:
said means of calculating both of compressor power consumption We which occurs if said compressor (is) is driven by said engine (23) and compressor power consumption Wm which occurs if said compressor (18) is driven by said electric motor (26), calculates them using general functions of a variable (BLV) calculated in said main controller (25). ambient temperature (AMB) detected by said sensor (36), room temperature (TR) detected by said sensor (34), a variable (Ps) calculated in said main controller (25), pressure (Pd) detected by said sensor (22), and electric motor driving efficiency (η).

3. A vehicular air conditioning apparatus (1) of claim 1, wherein:
said means of calculating both compressor power consumption We which occurs if said compressor (18) is driven by said engine (23) and compressor power consumption Wm which occurs if said compressor (18) is driven by said electric motor (26), calculates them using linear functions of a variable (BLV) calculated in said main controller (25), ambient temperature (AMB) detected by said sensor (36), room temperature (TR) detected by said sensor (34), a variable (Ps) calculated in said main controller (25), pressure (Pd) detected by said sensor (22), and electric motor driving efficiency (η).

4. A vehicular air conditioning apparatus (1) of claim 1, wherein:
said means of calculating both of compressor power consumption We which occurs if said compressor (18) is driven by said engine (23) and compressor power consumption Wm which occurs if said compressor (18) is driven by said electric motor (26), calculates them using linear functions of a variable (BLV) calculated in said main controller (25), ambient temperature (AMB) detected by said sensor (36), room temperature (TR) detected by said sensor (34), a variable (Ps) calculated in said main controller (25), pressure (Pd) detected by said sensor (22), and electric motor driving efficiency (η), wherein the coefficients and constants of said linear functions are determined by conducting multivariate analysis on statistical correlation data between (We, Wm) and (BLV, AMB, TR, Ps, Pd).

5. A vehicular air conditioning apparatus (1) of claim 1, further wherein:
a conditional control rule is added according to which said compressor (18) is driven by said electric motor (26) even when said engine is at rest and We<Wm, if room temperature is high.

6. A vehicular air conditioning apparatus (1) of claim 1, wherein:
a control rule is added according to which said compressor (18) is driven by said engine (23) when said engine (23) is rotating and We≥Wm, if Wm is greater than Wml where Wml is a power consumption limit value imposed on said air conditioning apparatus in a specification.

## Patentansprüche

1. Fahrzeugklimaanlage (1), aufweisend
einen Luftkanal (2),
ein Gebläse (6), das in dem Luftkanal (2) angeordnet ist,
einen Verdampfer (7), der in dem Luftkanal (2) angeordnet ist,
einen Heizkern (8), der in dem Luftkanal (2) angeordnet ist,
eine Luftmischungsklappe (10), die unmittelbar stromabwärts von dem Heizkern (8) angeordnet ist,
einen Kühlkreislauf (17), der aus einem verstellbaren Kompressor (18), der entweder durch einen Elektromotor (26) direkt oder durch einen Fahrzeugmotor (23) über eine Kupplung (24) angetrieben werden kann, einem Kondensator (19), einem Sammelbehälter (20), einem Drucksensor (22), einem Ausdehnungsventil (21) und dem Verdampfer (7) besteht,
einen Wasserkreislauf (40), der aus dem Motor (23) und dem Heizkern (8) besteht,
eine Elektromotorantriebsschaltung (29), die die Drehfrequenz des Elektromotors (26) steuert,
einen Temperatursensor (33), der die Temperatur (Te) einer aus dem Verdampfer (7) ausgegebenen Luft erfasst,
einen Temperatursensor (34), der die Raumtemperatur (TR) in einem Fahrgastraum erfasst,
einen Sensor (35), der die Sonneneinstrahlmenge (RAD) erfasst,
einen Temperatursensor (36), der die Umgebungslufttemperatur (AMB) erfasst,
eine Motorsteuerung (37), die ein Motordrehzahlsignal (Ne) ausgibt,
eine Raumtemperatureinstellvorrichtung (31), die eine Soll-Raumtemperatur (Trs) ausgibt,
einen Spannungs-Strom-Sensor (30), der eine Spannung (Vm) einer Batterie (28) erfasst, die einen elektrischen Strom an die Elektromotorantriebssteuerung (29) liefert,
eine Hauptsteuerung (25), die diese obigen Signale verarbeitet und Steuersignale an eine Gebläsespannungssteuerung (32), eine Betätigungseinrichtung für die Luftmischungsklappe (9), die Kupplung (24), den Kompressor (18) und die Elektromotorantriebssteuerung (29) ausgibt, wobei
die Hauptsteuerung (25) eine Vorrichtung zur Berechnung sowohl des Kompressorleistungsverbrauchs We, der auftritt, wenn der Kompressor (18) durch den Verbrennungsmotor (23) angetrieben wird, als auch den Kompressorleistungsverbrauch Wm, der auftritt wenn der Kompressor (18) durch den Elektromotor (20) angetrieben wird, berechnet, basierend auf den Werten der Signale der obigen Sensoren, und innerer berechneter Werte, und eine Vorrichtung zum Vergleichen der Werte von We und Wm besitzt, und die Elektromotorantriebsschaltung (29) und die Kupplung (24) steuert, so dass der Kompressor (18) durch den Elektromotor (26) angetrieben wird, wenn We≥Wm; und durch den Verbrennungsmotor (23), wenn We<Wm.

2. Fahrzeugklimaanlage (1) gemäß Anspruch 1, wobei
die Vorrichtung zur Berechnung sowohl des Kompressorleistungsverbrauchs We, der auftritt, wenn der Kompressor (is) durch den Verbrennungsmotor (23) angetrieben wird, als auch des Kompressorleistungsverbrauchs Wm, der auftritt, wenn der Kompressor (18) durch den Elektromotor (26) angetrieben wird, diese unter Verwendung genereller Funktionen einer Variablen (BLV), die in der Hauptsteuerung (25) berechnet wird, der Umgebungstemperatur (AMB), die durch den Sensor (36) erfasst temperatur (AMB), die durch den Sensor (36) erfasst wird, der Raumtemperatur (TR), die durch den Sensor (34) erfasst wird, einer Variablen (Ps), die in der Hauptsteuerung (25) berechnet wird, eines Drucks (Pd), der durch den Sensor (22) erfasst wird, und eines Elektromotorantriebswirkungsgrads (η) berechnet.

3. Fahrzeugklimaanlage (1) gemäß Anspruch 1, wobei
die Vorrichtung zur Berechnung sowohl des Kompressorleistungsverbrauchs We, der auftritt wenn der Kompressor (is) durch den Verbrennungsmotor (23) angetrieben wird, als auch des Kompressorleistungsverbrauchs Wm, der auftritt, wenn der Kompressor (18) durch den Elektromotor (26) angetrieben wird, diese unter Verwendung linearer Funktionen einer Variablen (BLV), die in der Hauptsteuerung (25) berechnet wird, der Umgebungstemperatur (AMB), die durch den Sensor (36) erfasst wird, der Raumtemperatur (TR), die durch den Sensor (34) erfasst wird, einer Variablen (Ps), die in der Hauptsteuerung (25) berechnet wird, eines Drucks (Pd), der durch den Sensor (22) erfasst wird, und eines Elektromotorantriebswirkungsgrads (η) berechnet.

4. Fahrzeugklimaanlage (1) gemäß Anspruch 1, wobei
die Vorrichtung zur Berechnung sowohl des Kompressorleistungsverbrauchs We, der auftritt wenn der Kompressor (is) durch den Verbrennungsmotor (23) angetrieben wird, als auch des Kompressorleistungsverbrauchs Wm, der auftritt, wenn der Kompressor (18) durch den Elektromotor (26) angetrieben wird, dieser unter Verwendung linearer Funktionen einer Variablen (BLV), die in der Hauptsteuerung (25) berechnet wird, der Umgebungstemperatur (AMB), die durch den Sensor (36) erfasst wird, der Raumtemperatur (TR), die durch den Sensor (34) erfasst wird, einer Variablen (Ps), die in der Hauptsteuerung (25) berechnet wird, eines Drucks (Pd), der durch den Sensor (22) erfasst wird, und eines Elektromotorantriebswirkungsgrads (η) berechnet, wobei die Koeffizienten und Konstanten der linearen Funktionen durch Durchführung mehrdimensionaler Analysen von statistischen Korrelationsdaten zwischen (We,Wm) und (BLV,AMB,TR,Ps,Pd) bestimmt werden.

5. Fahrzeugklimaanlage (1) gemäß Anspruch 1, wobei des weiteren:
eine Bedingungssteuerregel hinzugefügt wird, gemäß der der Kompressor (18) durch den Elektromotor (26) angetrieben wird, sogar wenn der Verbrennungsmotor ruht und We<Wm, wenn die Raumtemperatur hoch ist.

6. Fahrzeugklimaanlage (1) gemäß Anspruch 1, wobei:
eine Steuerregel hinzugefügt wird, gemäß der der Kompressor (18) von dem Verbrennungsmotor (23) angetrieben wird, wenn sich der Verbrennungsmotor (23) dreht und We≥Wm, wenn Wm>Wml, wobei Wml ein Leistungsverbrauchsgrenzwert ist, der in einer Spezifikation der Klimaanlage enthalten ist.

## Revendications

1. Appareil de climatisation de véhicule (1), comprenant :
une gaine d'air (2) ;
un ventilateur (6) disposé dans la gaine d'air (2) ;
un évaporateur (7) disposé dans la gaine d'air (2) ;
un radiateur de chauffage (8) disposé dans la gaine d'air (2) ;
une porte de mélange d'air (10) disposé à un emplacement immédiatement en aval du radiateur de chauffage (8) ;
un circuit de refroidissement (17) constitué d'un compresseur volumétrique variable (18) qui peut être entraîné soit directement par un moteur électrique (26) soit par le moteur de véhicule (23) via un embrayage (24), un condenseur (19), un réservoir (20), un capteur de pression absolue (22), un détendeur (21) et l'évaporateur (7) ;
un circuit d'eau (40) constitué du moteur (23) et du radiateur de chauffage (8) ;
un circuit d'entraînement de moteur électrique (29) qui commande la vitesse de rotation du moteur électrique (26) ;
un capteur de température (33) qui détecte la température (Te) d'un air déchargé par l'évaporateur (7) ;
un capteur de température (34) qui détecte la température ambiante (TR) de l'habitacle du véhicule ;
un capteur (35) qui détecte la quantité d'ensoleillement (RAD) ;
un capteur de température (36) qui détecte la température de l'air ambiant (AMB) ;
un régulateur moteur (37) qui génère un signal de vitesse de rotation moteur (Ne) ;
un système de réglage de la température ambiante (31) qui génère la température ambiante cible (Trs) ;
un capteur de tension-courant (30) qui détecte une tension (Vm) d'une batterie (28) qui alimente en énergie électrique le circuit d'entraînement de moteur électrique (29) ;
un régulateur principal (25) qui traite les signaux susmentionnés et génère des signaux de commande vers un régulateur de tension ventilateur (32), un actionneur de porte de mélange d'air (9), l'embrayage (24), le compresseur (18), et le circuit d'entraînement de moteur électrique (29) ;
dans lequel
le régulateur principal (25) a un moyen de calcul permettant de calculer à la fois la consommation de puissance du compresseur We qui est générée si le compresseur (18) est entraîné par le moteur (23) et la consommation de puissance du compresseur Wm qui est générée si le compresseur (18) est entraîné par le moteur électrique (20) à partir des valeurs des signaux des capteurs susmentionnés et des valeurs calculées en interne, et un moyen de comparaison des valeurs de We et Wm, et qui commande le circuit d'entraînement de moteur électrique (29) et l'embrayage (24) de manière à entraîner le compresseur (18) par le moteur électrique (26) si We ≥ Wm, et par le moteur (23) si We < Wm.

2. Appareil de climatisation de véhicule (1) selon la revendication 1,
dans lequel
le moyen de calcul, permettant de calculer à la fois la consommation de puissance du compresseur We qui est générée si le compresseur (18) est entraîné par le moteur (23) et la consommation de puissance du compresseur Wm qui est générée si le compresseur (18) est entraîné par le moteur électrique (26), effectue ces calculs en utilisant des fonctions générales d'une variable (BLV) calculée dans le régulateur principal (25), la température de l'air ambiant (AMB) détectée par le capteur (36), la température de l'habitacle (TR) détectée par le capteur (34), une variable (Ps) calculée dans le régulateur principal (25), la pression (Pd) détectée par le capteur (22), et un rendement d'entraînement de moteur électrique (η).

3. Appareil de climatisation de véhicule (1) selon la revendication 1,
dans lequel
le moyen de calcul, permettant de calculer à la fois la consommation de puissance du compresseur We qui est générée si le compresseur (18) est entraîné par le moteur (23) et la consommation de puissance du compresseur Wm qui est générée si le compresseur (18) est entraîné par le moteur électrique (26), effectue ces calculs en utilisant des fonctions linéaires d'une variable (BLV) calculée dans le régulateur principal (25), la température de l'air ambiant (AMB) détectée par le capteur (36), la température de l'habitacle (TR) détectée par le capteur (34), une variable (Ps) calculée dans le régulateur principal (25), la pression (Pd) détectée par le capteur (22), et un rendement d'entraînement de moteur électrique (η).

4. Appareil de climatisation de véhicule (1) selon la revendication 1,
dans lequel
le moyen de calcul, permettant de calculer à la fois la consommation de puissance du compresseur We qui est générée si le compresseur (18) est entraîné par le moteur (23) et la consommation de puissance du compresseur Wm qui est générée si le compresseur (18) est entraîné par le moteur électrique (26), effectue ces calculs en utilisant des fonctions linéaires d'une variable (BLV) calculée dans le régulateur principal (25), la température de l'air ambiant (AMB) détectée par le capteur (36), la température de l'habitacle (TR) détectée par le capteur (34), une variable (Ps) calculée dans le régulateur principal (25), la pression (Pd) détectée par le capteur (22), et un rendement d'entraînement de moteur électrique (η),
dans lequel les coefficients et constantes desdites fonctions linéaires sont déterminé(e)s en effectuant une analyse à plusieurs variables d'une donnée de corrélations statistiques entre (We, Wm) et (BLV, AMB, TR, Ps, Pd).

5. Appareil de climatisation de véhicule (1) selon la revendication 1,
dans lequel en outre
une règle de commande conditionnelle est ajoutée selon laquelle le compresseur (18) est entraîné par le moteur électrique (26) même lorsque le moteur est au repos et We<Wm, si la température de l'habitacle est élevée.

6. Appareil de climatisation de véhicule (1) selon la revendication 1,
dans lequel
une règle de commande est ajoutée selon laquelle le compresseur (18) est entraîné par le moteur (23) lorsque le moteur (23) tourne et We≥Wm, si Wm est supérieur à Wm1, où Wm1 est une valeur limite de consommation de puissance imposée par une spécification sur l'appareil de climatisation.
